# EUROPÄISCHE PATENTSCHRIFT

(11) **EP 1 596 109 B1**
(45) Veröffentlichungstag und Bekanntmachung des Hinweises auf die Patenterteilung: **14.03.2007**
(21) Anmeldenummer: 05009283.2
(22) Anmeldetag: 28.04.2005
(51) Int. Cl.: F16K 7/14, F16K 31/06, F16K 41/10

(54) **Elektromagnetventil für flüssige Medien, insbesondere Heisswasser**
Electromagnetic valve for fluids, particularly hot water
Soupape électromagnétique pour fluides, notamment eau chaude

(30) Priorität: 11.05.2004 DE 102004023117
(43) Veröffentlichungstag der Anmeldung: 16.11.2005
(73) Patentinhaber: A. und K. Müller GmbH & Co. KG, 40595 Düsseldorf (DE)
(72) Erfinder: Berger, Gerd, 40593 Düsseldorf (DE); Glaus, Uwe, 40593 Düsseldorf (DE); Riedel, Heinz-Dieter, 40593 Düsseldorf (DE)
(74) Vertreter: Feder, Wolf-Dietrich

(56) Entgegenhaltungen:
- DE-A1- 10 162 794
- US-A- 4 819 691
- US-B1- 6 648 006

## Beschreibung

Die Erfindung betrifft ein Elektromagnetventil für flüssige Medien, insbesondere Heißwasser, mit den Merkmalen aus dem Oberbegriff des Patentanspruchs 1. Ein derartiges Ventil ist beispielsweise in DE 101 62 794 A1 beschrieben.

Bei dem bekannten Ventil ist die Trennmembran, mittels der die Ventilkammer gegen den Innenraum des Magnetsystems abgedichtet ist, als übliche Rollmembran ausgebildet, in die auch der Ventilteller integriert ist. Eine solche Rollmembran besitzt an ihrem oberen Ende eine umlaufende Falte, und in dieser Falte können sich Luft- bzw. Dampfblasen ansammeln. Diese Ansammlung kann so stark werden, dass sich die Blasen bis in den Zulaufkanal zurück erstrecken. Es hat sich gezeigt, dass im Bereich derartiger Luft- bzw. Dampfblasen eine besonders starke Verkalkung des Ventils erfolgt und die Dosierungsgenauigkeit beeinträchtigt wird.

Bei einer Ausführungsform des bekannten Ventils besitzt der Zulaufkanal mindestens auf einem sich an die Ventilkammer anschließenden Teilabschnitt seiner Länge eine obere Innenwand, die zur Ventilkammer hin schräg abwärts verläuft. Durch diese Ausbildung soll erreicht werden, dass im Medium auftretende Luft- bzw. Dampfblasen gegen die Einströmrichtung nach außen abgeführt werden. Es hat sich aber gezeigt, dass diese Ausbildung allein nicht ausreicht, um auch die sich in der Falte der Rollmembran bildenden Luft- bzw. Dampfblasen abzuführen.

In dem Dokument US 6 648 006 B1 ist ein manuell betätigbares Ventil beschrieben mit einem Ventilgehäuse, in dem eine Ventilkammer angeordnet ist, die über schräg zur Ventilachse geführte Zulaufkanäle mit Ventileingängen und über einen Ventilsitz und einen Auslaufkanal mit einem Ventilausgang verbunden ist. In der Ventilkammer ist ein in axialer Richtung bewegbarer, dem Ventilsitz gegenüberliegender Ventilteller angeordnet, der in eine Trennmembran integriert ist, deren Außenrand am Ventilgehäuse befestigt ist. Die der Ventilkammer zugewandte Oberfläche der Trennmembran erstreckt sich von einem auf der Höhe des oberen Innenwandteils der Zulaufkanäle, an deren Einmündung in die Ventilkammer liegenden Außenrand in einer gleichförmigen und im gleichen Sinne verlaufenden Abwärtskrümmung zum Ventilteller hin, so dass alle Teile dieser Oberfläche der Trennmembran unterhalb des Aussenrandes liegen.

Der Erfindung liegt die Aufgabe zugrunde, ein Elektromagnetventil mit den Merkmalen aus dem Oberbegriff des Patentanspruchs 1 so auszubilden, dass alle sich in der Ventilkammer bildenden Luft- bzw. Dampfblasen sicher durch den Zulaufkanal nach außen, also bespielsweise in einen vorgeschalteten Heißwasserbehälter abgeführt werden und somit der Verkalkung des Ventils entgegengearbeitet und die Dosierungsgenauigkeit verbessert wird.

Die Lösung dieser Aufgabe erfolgt erfindungsgemäß mit den Merkmalen aus dem kennzeichnenden Teil des Patentanspruch 1. Vorteilhafte Weiterbildungen der Erfindung sind in den abhängigen Ansprüchen beschrieben.

Ein Grundgedanke der Erfindung besteht darin, die Trennmembran so auszubilden, dass sie keine Falte mehr besitzt sondern sich in einem durchlaufenden Bogen von ihrer Befestigungsstelle am Ventilgehäuse an den Ventilschaft heran erstreckt, wobei der Außenrand der Trennmembran auf der Höhe des oberen Innenwandteils des Zulaufkanals an dessen Einmündung in die Ventilkammer liegt und die Anordnung so ist, dass mindestens im geschlossenen Zustand des Ventils alle Teile der der Ventilkammer zugewandten Oberfläche der Trennmembran unterhalb des Außenrandes liegen. Bei dieser Ausbildung können alle sich in der Ventilkammer bildenden Luft- bzw. Dampfblasen, wenn sie aufsteigen, an der Oberfläche der Trennmembran entlanggleiten und somit in den Zulaufkanal gelangen, um dann an dem nach außen schräg ansteigenden oberen Innenwandteil des Zulaufkanals weiter nach außen geführt und abgeleitet zu werden. Es hat sich hierbei als vorteilhaft erwiesen, wenn der obere Innenwandteil des Zulaufkanals in der Form eines von innen nach außen schräg ansteigenden Ableitungskanals ausgebildet ist, in dem eine sich von der Einmündung des Zulaufkanals in die Ventilkammer nach außen über mindestens einen Teil der Länge dieses Ablaufkanals erstreckende Nut mit V-förmigem Querschnitt angeordnet ist. Über den ansteigenden Teil der Innenwand werden die Luft- bzw. Dampfblasen durch ihren Auftrieb wie auf einer schiefen Ebene nach außen geführt. Durch den V-förmigen Querschnitt der Nut wird die Reibung zwischen den Luft- bzw. Dampfblasen und der Innenwand des Zulaufkanals stark verringert, so dass die Abführung erleichtert ist.

Die bogenförmig durchlaufende Trennmembran kann in ihrem Verlauf vom Außenrand zum Innenrand ein oder mehrere Knickstellen aufweisen.

Wie weiter unten anhand eines Ausführungsbeispiel näher erläutert, ist es im Sinne einer Kalkabführung aus dem ventil erfindungswesentlich, dass der Ventilsitz gegenüber dem Boden der Ventilkammer hochgezogen ist, so dass um den Ventilsitz herum eine ringförmige Aufnahmetasche entsteht, in der sich Kalkteilchen sammeln können, die dann nicht oder nicht so rasch in den Bereich des Ventilsitzes gelangen.

Bei einer weiteren, besonders vorteilhaften Ausführungsform des erfindungsgemäßen Ventils ist die Mittelachse von Ventilkammer und Magnetsystem von der Vertikalen abweichend so angeordnet, dass sie mit der Mittelachse des Zulaufkanals einen stumpfen Winkel einschließt. Das Ventil ist also um einen vorgegebenen Winkel vom Zulaufkanal weg nach hinten gekippt. Dies hat zur Folge, dass der Bereich unterhalb der Trennmembran, an der sich die Luft-bzw. Dampfblasen sammeln, so schräg steht, dass sich der Anfang des Ableitungskanals im Zulaufkanal am höchsten Punkt der Trennmembran befindet, wodurch alle sich an der Trennmembran sammelnden Blasen an der Membranwand entlang sich zu diesem höchsten Punkt begeben und dann in den Ableitungskanal gelangen.

Es hat sich weiterhin als vorteilhaft erwiesen, wenn mindestens der obere Innenwandteil des Zulaufkanals und/oder die innere Oberfläche der Trennmembran mit einer Substanz beschichtet sind, die der Oberfläche Hydrophobie sowie eine einen Selbstreinigungseffekt bewirkende Strukturierung im Nanometerbereich verleiht. Dieser Effekt ist unter der als Marke eingetragenen Kennzeichnung Lotus-Effect bekannt. Er bewirkt, dass Wassertropfen auf einer derartigen Oberfläche Kugelform annehmen und besonders leicht abperlen. Der gleiche Effekt tritt ein, wenn Luftblasen innerhalb einer Wassermenge auf eine derartige Oberfläche auftreffen, und dies bewirkt eine Unterstützung der Ableitung von Luft- bzw. Dampfblasen durch den Zulaufkanal nach außen.

Im folgenden werden anhand der beigefügten Zeichnungen Ausführungsbeispiele für ein Elektromagnetventil nach der Erfindung näher erläutert.

In den Zeichnungen zeigen:
- Fig. 1: einen Axialschnitt durch ein Elektromagnetventil, der durch die Mittelachse des Zulaufkanals geht;
- Fig. 2: eine perspektivische Ansicht des Elektromagnetventils nach Fig. 1;
- Fig. 3: in einer Darstellung analog Fig. 1 eine weitere Ausführungsform des Elektromagnetventils mit gegenüber dem Zulaufkanal nach hinten verkipptem Ventil;
- Fig. 4: in einer Darstellung analog Fig. 2 das Elektromagnetventil nach Fig. 3;
- Fig. 5: in gegenüber Fig. 3 vergrößerter Teildarstellung das Elektromagnetventil nach Fig. 3 im Bereich des Zulaufkanals;
- Fig. 6: einen Einblick in den Zulaufkanal nach Fig. 5 vom Ventileingang her.

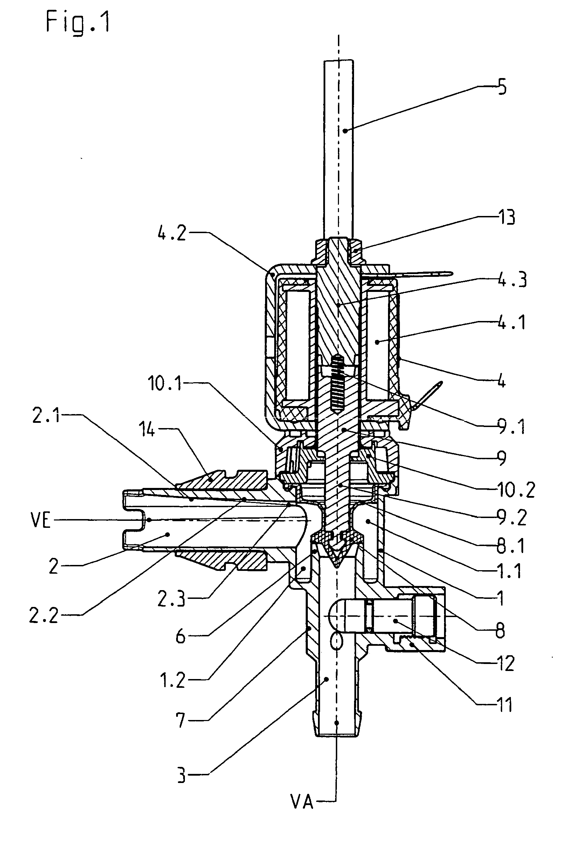

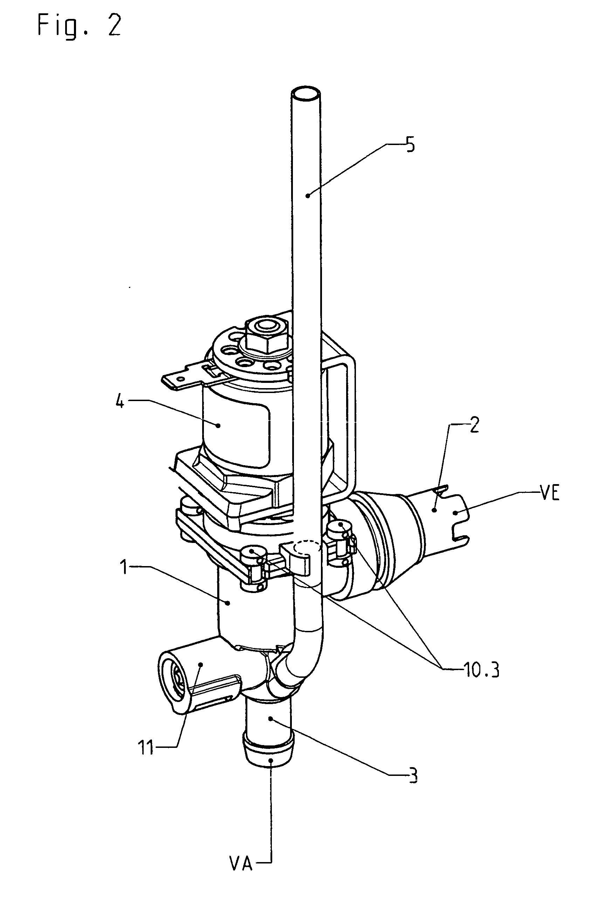

Das in den Fig. 1 und 2 dargestellte Elektromagnetventil besitzt ein Ventilgehäuse 1, in dem eine Ventilkammer 1.1 angeordnet ist. Diese Ventilkammer 1.1 ist über einen Zulaufkanal 2 mit dem Ventileingang VE verbunden und über einen Ventilsitz 6 und einen Auslaufkanal 3 mit dem Ventilausgang VA. In der Ventilkammer 1.1 ist ein Ventilteller 8 angeordnet, der zwischen einer Öffnungsstellung und einer Schließstellung, in welcher er dichtend auf dem Ventilsitz 6 aufsitzt, hin- und herbewegbar ist. Das Ventil ist für die in Fig. 1 dargestellte Montage gedacht, bei welcher sich der Auslaufkanal 3 an der Unterseite des Ventilgehäuses 1 befindet. An der Oberseite des Ventilgehäuses 1 ist ein Magnetsystem 4 angeordnet, das über Verbindungsstücke 10.1 und 10.2 und 10.3 fest mit dem Ventilgehäuse 1 verbunden ist. Das Magnetsystem 4 besitzt eine Magnetspule 4.1, in welcher ein Magnetanker 9 angeordnet ist. Das obere Ende des Magnetankers 9 liegt einem im Oberteil der Magnetspule 4.1 angeordneten, mit einem Magnetjoch 4.2 verbundenen Kopfstück 4.3 gegenüber. Das andere Ende des Magnetankers 9 ist über einen in die Ventilkammer 1.1 hineingeführten Ventilschaft 9.2 mit dem Ventilteller 8 verbunden. Die Abdichtung zwischen dem Innenraum des Magnetsystems 4 und der Ventilkammer 1.1 erfolgt über eine Trennmembran 8.1, die einstückig mit dem Ventilteller 8 verbunden ist. Im entregten Zustand der Magnetspule 4.1 ist der Ventilteller 8 durch eine zwischen dem Magnetanker 9 und dem Kopfstück 4.3 angeordnete Druckfeder 9.1 in der Schließstellung festgehalten. Im erregten Zustand der Magnetspule 4.1 wird der Ventilteller 8 in die Öffnungsstellung bewegt.

Der Ventilsitz 6 befindet sich am inneren Ende eines den Auslaufkanal 3 und den Ventilausgang VA enthaltenden Auslaufteil 7. Der Boden der Ventilkammer 1.1 ist zur Bildung einer Aufnahmetasche 1.2 für Kalkteilchen im Umgebungsbereich des Ventilsitzes 6 um ein vorgegebenes Stück unterhalb des Ventilsitzes und unterhalb der Einmündung des Zulaufkanals 2 in die Ventilkammer 1.1 angeordnet.

Der Außenrand der Trennmembran 8.1 ist derart am Ventilgehäuse 1 befestigt, dass er sich an der Einmündungsstelle 2.3 des Zulaufkanals 2 in die Ventilkammer 1.1 auf der Höhe des oberen Innenwandteils 2.2 des Zulaufkanals befindet. Von dieser Stelle aus verläuft die Trennmembran 8.1 in einer im wesentlichen gleichförmigen - dies bedeutet, bis auf einige Knickstellen gleichmäßigen - Krümmung mit gleichem Krümmungssinn abwärts zum Ventilschaft 9.2 hin. Wie aus der Zeichnung zu erkennen, ist die Anordnung so, dass mindestens im geschlossenen Zustand des Ventils alle Teile der der Ventilkammer 1.1 zugewandten Oberfläche der Trennmembran 8.1 unterhalb des Ausßenrandes liegen und keine sich nach oben erstreckende Falte gebildet wird.

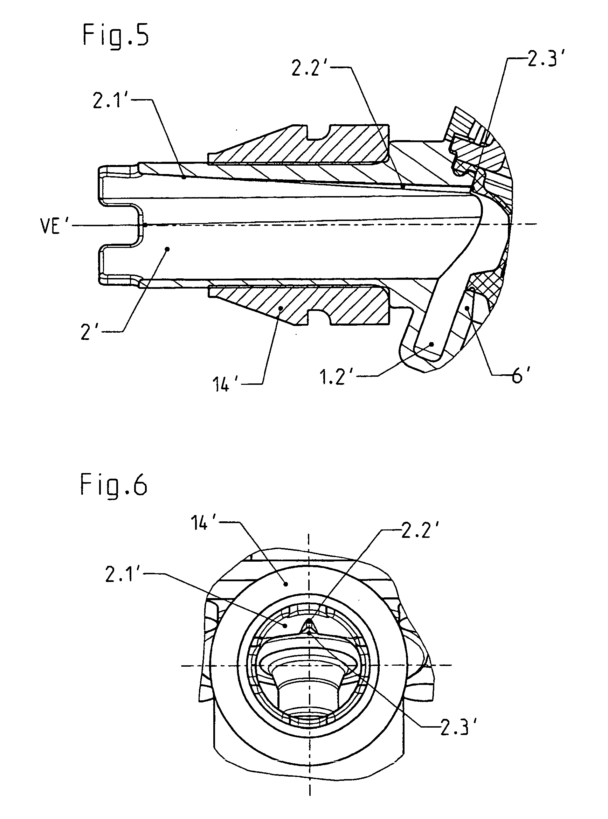

Der obere Innenwandteil 2.1 des Zulaufkanals 2 ist als nach außen schräg ansteigender Ableitungskanal ausgebildet, in dem eine sich von der Einmündungsstelle 2.3 in die Ventilkammer 1.1 nach außen über einen Teil der Länge des Ableitungskanals erstreckende Nut 2.2 mit V-förmigem Querschnitt angeordnet ist (siehe hierzu auch Fig. 5 und 6 der Zeichnungen).

Diese Ausbildung hat zur Folge, dass sich in der Ventilkammer 1.1 bildende Luft- bzw. Dampfblasen sich an der Oberfläche der Trennmembran 8.1 sammeln, dort aber nicht hängenbleiben, sondern infolge der Bildung eines Flüssigkeitswirbels in der Ventilkammer 1.1 nach außen befördert werden und schließlich an der Einmündungsstelle 2.3 in den Ableitungskanal und dort in die Nut 2.2 hineingelangen, in der sie entgegen der Strömungsrichtung nach außen abgeführt werden.

Am Auslaufteil 7 ist quer zur axialen Richtung ein Ansatzstück angeordnet, das als in den Auslaufkanal 3 einmündendes Ansatzrohr 11 ausgebildet ist. In dem Ansatzrohr 11 ist eine in Querrichtung zum Auslaufkanal 3 bewegbare Regelschraube 12 angeordnet.

Weiterhin mündet in den Auslaufkanal 3 ein Belüftungsrohr 5.

Am Magnetsystem 4 ist das Kopfstück 4.3 über eine Schraubenmutter 13 mit dem Magnetjoch 4.2 verschraubt.

An der Außenseite des Zulaufkanals 2 ist ein Dichtungsstück 14 angeordnet, über das das Ventil in einen nicht dargestellten Heißwasserbehälter dichtend eingesetzt werden kann.

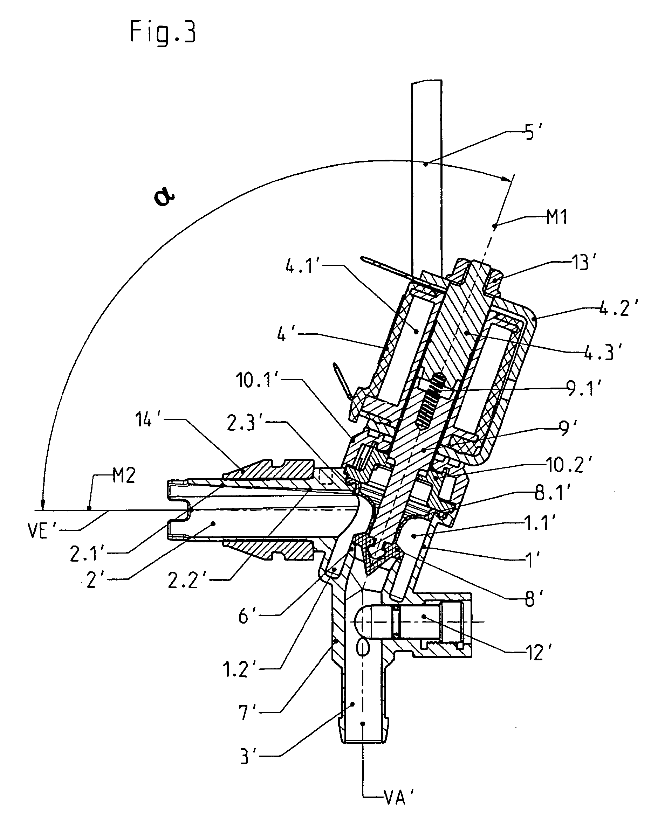

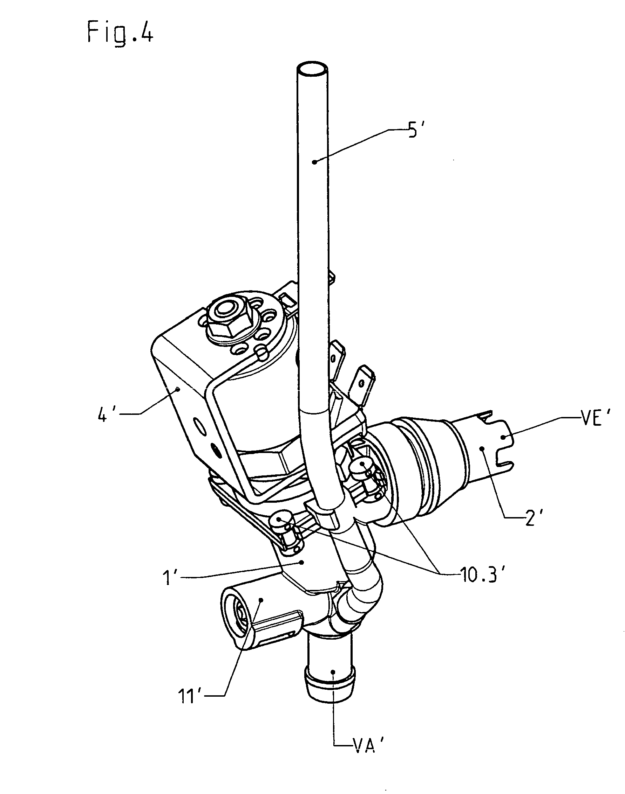

Die Fig. 3 bis 6 zeigen eine etwas veränderte Ausführungsform des Ventils nach den Fig. 1 und 2. In den Fig. 3 bis 6 sind alle Einzelteile mit den gleichen Bezugsziffern bezeichnet wie in Fig. 1 und 2, jedoch mit einem Apostrophstrich versehen. Der grundsätzliche Aufbau des Ventils ist der gleiche wie bei der Ausführungsform nach den Fig. 1 und 2 und wird daher nicht noch einmal erläutert. Der Unterschied der beiden Ausführungsformen besteht darin, dass bei dem Ventil nach den Fig. 3 und 4 die Mittelachse M1 vom Magnetsystem 4' und Ventilkammer 1.1' von der Vertikalen abweichend mit der Mittelachse M2 des Zulaufkanals 2' einen vorgegebenen stumpfen Winkel α bildet. Dadurch erscheint das Ventil gegenüber dem Zulaufkanal 2' nach hinten verkippt, so dass, wie aus Fig. 3 unmittelbar zu ersehen, die sich in der Ventilkammer 1.1' bildenden Luft- bzw. Dampfblasen an der der Ventilkammer 1.1' zugewandten Oberfläche der Trennmembran 8.1' entlangwandernd zu deren höchstem Punkt an der Einmündungsstelle 2.3' des Zulaufkanals 2' begeben und dort unmittelbar in den Ablaufkanal geraten, in dem sie nach außen abgeführt werden. Insbesondere in Fig. 6 ist die genauere Ausbildung am oberen Innenwandteil 2.1' des Zulaufkanals 2' zu erkennen. Dieser obene Innenwandteil 2.1' besitzt im inneren Bereich, also in der Nähe der Einmündungsstelle 2.3' in die Ventilkammer 1.1', eine von der Kreisform abweichende flachere Krümmung als im äußeren Bereich. Weiterhin ist in diesem oberen Innenwandteil die Nut 2.2' mit V-förmigem Querschnitt angeordnet, durch welche die Luft- bzw. Dampfblasen nach außen abgeleitet werden.

Bei beiden Ausführungsformen des Elektromagnetventils kann es vorteilhaft sein, mindestens den oberen Innenwandteil 2.1 bzw. 2.1' des Zulaufkanals und/oder die innere Oberfläche der Trennmembran 8.1 bzw. 8.1' in der bereits geschilderten Weise mit einer Substanz zu beschichten, die der Oberfläche Hydrophobie sowie eine einen Selbstreinigungseffekt bewirkende Strukturierung im Nanometerbereich verleiht.

## Patentansprüche

1. Elektromagnetventil für flüssige Medien, insbesondere Heißwasser, mit einem Ventilgehäuse (1), in dem eine Ventilkammer (1.1) angeordnet ist, die über einen Zulaufkanal (2) direkt mit einem Ventileingang (VE) und über einen Ventilsitz (6) und einen Auslaufkanal (3) mit einem Ventilausgang (VA) verbunden ist, und mit einem an der Oberseite des Ventilgehäuses angeordneten Magnetsystem (4) mit einer Magnetspule (4.1) in welcher ein Magnetanker (9) geführt ist, dessen eines Ende über einen in die Ventilkammer geführten Ventilschaft (9.2) mit einem Ventilteller (8) verbunden ist, wobei die Ventilkammer gegen den Innenraum des Magnetsystems durch eine Trennmembran (8.1) abgedichtet ist, deren Innenrand am Ventilschaft oder am Ventilteller und deren Außenrand am Ventilgehäuse befestigt ist und bei welchem der Zulaufkanal mindestens auf einem sich an die Ventilkammer anschließenden Teilabschnitt seiner Länge einen oberen Innenwandteil aufweist, der zur Ventilkammer hin schräg abwärts verläuft, **dadurch gekennzeichnet, dass** die der Ventilkammer (1.1) zugewandte Oberfläche der Trennmembran (8.1) sich von einem auf der Höhe des oberen Innenwandteils des Zulaufkanals (2) an dessen Einmündung (2.3) in die Ventilkammer (1.1) liegenden Außenrand in einer im wesentlichen gleichförmigen und im gleichen Sinne verlaufenden Abwärtskrümmung zum Ventilschaft (9.2) hin erstreckt, wobei die Anordnung so ist, dass mindestens im geschlossenen Zustand des Ventils alle Teile dieser Oberfläche der Trennmembran (8.1) unterhalb des Außenrandes liegen, und dass der Boden der Ventilkammer (1.1) zur Bildung einer Aufnahmetische (1.2) für Kalkteilchen mindestens im Umgebungsbereich des Ventilsitzes (6) um ein vorgegebenes Stück unterhalb des Ventilsitzes und unterhalb der Einmündung des Zulaufkanals (2) in die Ventilkammer (1.1) liegt.

2. Elektromagnetventil nach Anspruch 1, **dadurch gekennzeichet, dass** der obere Innenwandteil (2.1) des Zulaufkanals (2) als von innen nach außen schräg ansteigender Ableitungskanal ausgebildet ist.

3. Elektromagnetventil nach Anspruch 2, **dadurch gekennzeichnet, dass** im Ableitungskanal eine sich von der Einmündung (2.3) des Zulaufkanals (2) in die Ventilkammer (1.1) nach außen über mindestens einen Teil der Länge des Ablaufkanals erstreckende Nut (2.2, 2.2') mit V-förmigem Querschnitt angeordnet ist.

4. Elektromagnetventil nach Anspruch 3, **dadurch gekennzeichnet, dass** der Nutengrund einen anderen Steigungswinkel aufweist als der Ableitungskanal.

5. Elektromagnetventil nach einem der Ansprüche 2 bis 4, **dadurch gekennzeichnet, dass** im Bereich des Ableitungskanals der obere Innenwandteil (2.1') des Zulaufkanals (2') eine von der Kreisform abweichende flachere Krümmung aufweist als im äußeren Bereich des Zulaufkanals.

6. Elektromagnetventil nach einem der Ansprüche 1 bis 5, **dadurch gekennzeichnet, dass** die Trennmembran (8.1) in ihrem Verlauf vom Außenrand zum Innenrand mindestens eine Knickstelle aufweist.

7. Elektromagnetventil nach einem der Ansprüche 1 bis 6, **dadurch gekennzeichnet, dass** Ausbildung und Anordnung des Ventils derart sind, dass die Mittelachse (M1) von Ventilkammer (1.1') und Magnetsystem (4') von der Vertikalen abweichend mit der Mittelachse (M2) des Zulaufkanals (2') einen vorgegebenen stumpfen Winkel (α) bildet.

8. Elektromagnetventil nach einem der Ansprüche 1 bis 7, **dadurch gekennzeichnet, dass** mindestens der obere Innenwandteil (2.1, 2.1') des Zulaufkanals (2, 2') und/oder die innere Oberfläche der Trennmembran (8.1, 8.1') mit einer Substanz beschichtet sind, die der Oberfläche Hydrophobie sowie eine einen Selbstreinigungseffekt bewirkende Strukturierung im Nanometerbereich verleiht.

## Claims

1. Electromagnetic valve for liquid media, in particular hot water, with a valve housing (1), in which a valve chamber (1.1) is arranged, which is connected directly to a valve entrance (VE) via a supply channel (2) and to a valve exit (VA) via a valve seat (6) and an outlet channel (3), and with a magnet system (4), arranged on the top of the valve housing, with a magnet coil (4.1) in which a magneto inductor (9) is guided, one end of which is connected to a valve disc (8) via a valve stem (9.2) guided into the valve chamber, the valve chamber being sealed against the inner space of the magnet system by a separating membrane (8.1), the inner edge of which is fixed to the valve stem or to the valve disc and the outer edge of which is fixed to the valve housing, and in which the supply channel has, at least on a partial section of its length adjoining the valve chamber, an upper inner wall part which runs obliquely downwards towards the valve chamber, **characterised in that** the surface of the separating membrane (8.1) facing the valve chamber (1.1) extends from an outer edge, located at the level of the upper inner wall part of the supply channel (2) at its junction (2.3) into the valve chamber (1.1), to the valve stem (9.2) in a substantially uniform downwards curve running in the same direction, the arrangement being such that at least in the closed state of the valve all parts of this surface of the separating membrane (8.1) are below the outer edge, and **in that** the floor of the valve chamber (1.1) is a preset amount below the valve seat and below the junction of the supply channel (2) into the valve chamber (1.1), to form an accommodating pocket (1.2) for lime particles at least in the surrounding area of the valve seat (6).

2. Electromagnetic valve according to claim 1, **characterised in that** the upper inner wall part (2.1) of the supply channel (2) is constructed as a discharge channel ascending obliquely from inside to outside.

3. Electromagnetic valve according to claim 2, **characterised in that** a groove (2.2, 2.2') with a V-shaped cross-section is arranged in the discharge channel, extending from the junction (2.3) of the supply channel (2) into the valve chamber (1.1) to the outside via at least part of the length of the discharge channel.

4. Electromagnetic valve according to claim 3, **characterised in that** the floor of the groove has a different angle of inclination from the discharge channel.

5. Electromagnetic valve according to one of claims 2 to 4, **characterised in that** in the area of the discharge channel the upper inner wall part (2.1') of the supply channel (2') has a flatter curvature, deviating from the circular shape, than in the outer area of the supply channel.

6. Electromagnetic valve according to one of claims 1 to 5, **characterised in that** the separating membrane (8.1) has at least one kinked point in its course from the outer edge to the inner edge.

7. Electromagnetic valve according to one of claims 1 to 6, **characterised in that** the construction and arrangement of the valve are such that the centre axis (M1) of the valve chamber (1.1') and the magnet system (4') deviating from the vertical forms a preset obtuse angle (α) with the centre axis (M2) of the supply channel (2').

8. Electromagnetic valve according to one of claims 1 to 7, **characterised in that** at least the upper inner wall part (2.1, 2.1') of the supply channel (2, 2') and/or the inner surface of the separating membrane (8.1, 8.1') are coated with a substance which gives the surface both hydrophobia and a texturing in the nanometer range causing a self-cleaning effect.

## Revendications

1. Vanne électromagnétique pour fluides liquides, en particulier pour eau chaude, comprenant un boîtier de vanne (1), dans lequel est disposée une chambre de vanne (1.1), laquelle est reliée par un canal d'admission (2) directement à une entrée de vanne (VE) et par un siège de vanne (6) et un canal de sortie (3) à une sortie de vanne (VA), et un système magnétique (4), disposé sur le côté supérieur du boîtier de vanne avec une bobine magnétique (4.1), dans laquelle est guidé un induit magnétique (9), dont l'extrémité est reliée par une tige de vanne (9.2) guidée dans la chambre de vanne à une tête de vanne (8), la chambre de vanne étant rendue étanche par rapport à l'espace intérieur du système magnétique par une membrane de séparation (8.1), dont le bord intérieur est fixé sur la tige de vanne ou sur la tête de vanne et dont le bord extérieur est fixé sur le boîtier de vanne et sur lequel le canal d'entrée présente au moins sur un tronçon partiel, consécutif à la chambre de vanne, de sa longueur une partie de paroi intérieure supérieure qui est agencée en descendant en biais par rapport à la chambre de vanne, **caractérisée en ce que** la surface, tournée vers la chambre de vanne (1.1), de la membrane de séparation (8.1) s'étend d'un bord extérieur, situé à la hauteur de la partie de paroi intérieure supérieure, du canal d'arrivée (2) sur son débouché (2.3) dans la chambre de vanne (1.1) dans une courbure descendante sensiblement uniforme et agencée dans le même sens en direction de la tige de vanne (9.2), l'agencement étant tel que, au moins dans l'état fermé de la vanne, toutes les parties de cette surface de la membrane de séparation (8.1) se situent au-dessous du bord supérieur et **en ce que** pour former un compartiment de logement (1.2) pour des particules de calcaire au moins dans la zone environnante du siège de vanne (6) une partie prédéfinie du fond de la chambre de vanne (1.1) est située au-dessous du siège de vanne et au-dessous du débouché du canal d'arrivée (2) dans la chambre de vanne (1.1).

2. Vanne électromagnétique selon la revendication 1, **caractérisée en ce que** la partie de paroi intérieure (2.1) supérieure du canal d'arrivée (2) est conçue sous la forme d'un canal de déflexion oblique s'agrandissant de l'intérieur vers l'extérieur.

3. Vanne électromagnétique selon la revendication 2, **caractérisée en ce que** dans le canal de déflexion est disposée une rainure (2.2, 2.2') s'étendant depuis le débouché (2.3) du canal d'arrivée (2) vers la chambre de vanne (1.1) vers l'extérieur sur au moins une partie de la longueur du canal de sortie avec une section en forme de V.

4. Vanne électromagnétique selon la revendication 3, **caractérisée en ce que** le fond de rainure présente un angle de pente différent de celui du canal de déflexion.

5. Vanne électromagnétique selon l'une quelconque des revendications 2 à 4, **caractérisée en ce que**, dans la zone du canal de déflexion, la partie de paroi intérieure (2.1') supérieure du canal d'arrivée (2') présente une courbure plus plate s'écartant de la forme cylindrique que dans la zone extérieure du canal de déflexion.

6. Vanne électromagnétique selon l'une quelconque des revendications 1 à 5, **caractérisée en ce que** la membrane de séparation (8.1) présente au moins un point de pliure dans son tracé allant du bord extérieur vers le bord intérieur.

7. Vanne électromagnétique selon l'une quelconque des revendications 1 à 6, **caractérisée en ce que** la réalisation et l'agencement de la vanne sont tels que l'axe médian (M1) de la chambre de vanne (1.1') et du système magnétique (4') s'écartant de la verticale forme avec l'axe médian (M2) du canal d'arrivée (2') un angle (α) obtus prédéfini.

8. Vanne électromagnétique selon l'une quelconque des revendications 1 à 7, **caractérisée en ce qu'**au moins la partie de paroi inférieure (2.1, 2.1') supérieure du canal d'arrivée (2,2') et/ou la surface intérieure de la membrane de séparation (8.1, 8.1') sont revêtues d'une substance qui confère à la surface de l'hydrophobie ainsi qu'une structuration entraînant un effet d'autonettoyage de l'ordre du nanomètre.
